# EUROPÄISCHE PATENTANMELDUNG

(11) **EP 0 536 397 A1**
(43) Veröffentlichungstag der Anmeldung: **14.04.1993**
(21) Anmeldenummer: 91908523.3
(22) Anmeldetag: 25.01.1991
(51) Int. Cl.: B23K 9/10

(54) **SELBSTÄNDIGE VORRICHTUNG ZUM LICHTBOGENSCHWEISSEN**

(30) Priorität: 13.11.1990 SU 4879143
(71) Anmelder: INSTITUT ELEKTROSVARKI IMENI E.O.PATONA AKADEMII NAUK UKRAINSKOI SSR, Kiev, 252650 (SU)
(72) Erfinder: DUDKO, Daniil Andreevich, Kiev, 252150 (SU); GORBENKO, Nikolai Vladimirovich, Kiev, 252133 (SU); KISTERSKAYA, Ljudmila Danilovna, Kiev, 252039 (SU); ZATSERKOVNY, Sergei Anatolievich, Kiev, 252028 (SU)
(74) Vertreter: Sparing - Röhl - Henseler Patentanwälte
(86) Internationale Anmeldenummer: SU9100014
(87) Internationale Veröffentlichungsnummer: WO9208563

(57) **Zusammenfassung**

Die autonome Lichtbogenschweißvorrichtung enthält einen Akkumulator (31), an den ein Spannungsregler (26), ein Motor (1), mit dem ein Ladegenerator (3) gekoppelt ist, und, miteinander parallelgeschaltet, die Anode (15) der Trenndiode (10), der Schalter (8) und der Spannungsregler (12) eines Steuerteils (11) angeschlossen sind. An den Spannungsregler (12) ist ein Ümschalter (21) angeschlossen, mit dem der Spannungsregler (26) und der Ladegenerator (3) wechselweise verbindbar sind, wobei der letztere mit einem Lichtbogenschweißmittel (35) und dem Schalter (8) sowie der Kathode (9) der Trenndiode (10) des Steuerteils (11) in Verbindung steht.

## Beschreibung

### Technisches Gebiet

Die vorliegende Erfindung betrifft die Schweißtechnik und bezieht sich insbesondere auf eine autonome Lichtbogenschweißvorrichtung.

### Zugrundeliegender Stand der Technik

Im Zusammenhang mit der Notwendigkeit, Schweiß- und Reparaturarbeiten bei fehlenden Speisungsquellen durchzuführen, benutzt man Energiequellen verschiedener Fahrzeuge (wie z.B. Traktor, Kraftwagen, Omnibus u.a.). Die dabei verwendeten autonomen Lichtbogenschueißvorrichtungen sind allerdings mit zusätzlichen Energiemitteln zu komplettieren. Zur Zeit ist am aussichtsreichsten die Durchführung der Lichtbogenschweißung unter Verwendung von dünnem Elektrodendraht für Feinblech-Schweißverbindungen.

Es ist eine autonome Lichtbogenschweißvorrichtung (US, A, 4705937) bekannt, die einen Ladegenerator, mit dessen Eingang ein Motor mechanisch gekoppelt ist, einen mit dem Ladegenerator elektrisch verbundenen Akkumulator, mit dessen Pluspolklemme der Motor in elektrischer Verbindung steht, einen mit dem Ladegenerator und der Pluspolklemme des Akkumulators elektrisch verbundenen Hauptspannungsregler, einen mit dem Ladegenerator und der Pluspolklemme des Akkumulators elektrisch verbundenen Steuerteil und ein Lichtbogenschweißmittel mit zwei Elektroden enthält, von denen die eine Elektrode sowie die einen Anschlüsse des Motors, des Ladegenerators und des Hauptspannungsreglers und die Minuspolklemme des Akkumulators in einem gemeinsamen Verbindungspunkt miteinander verbunden sind.

Die genannte Vorrichtung enthält eine Akkumulatorbatterie, die an den gemeinsamen Verbindungspunkt angeschlossen ist, während der Steuerteil mit einem Hauptumschalter, dessen einer Kontakt an den Ladegenerator gelegt ist, einer Schweißstromregeleinheit, an deren einen Anschluß sowie an die eine Klemme der Akkumulatorbatterie der andere Kontakt des Hauptumschalters wechselweise schaltbar ist, einer Ladediode, deren Anode mit dem Anschluß der Schweißstromregeleinheit in Verbindung steht, und einem zusätzlichen Umschalter versehen ist, bei dem der eine Kontakt an eine der Elektroden des Lichtbogenschweißmittels gelegt ist und der andere Kontakt wechselweise an die Anode der Ladediode sowie an die Ladediodenkathode und die mit dieser verbundenen Anschlüsse der Schweißstromregeleinheit und der Akkumulatorbatterie schaltbar ist.

Bei der in Rede stehenden autonomen Vorrichtung wird jedoch der Schweißstrom durch die Schweißstromregeleinheit des Steuerteils geregelt, wobei die autonome Vorrichtung steil abfallende Stromspannungskennlinien mit begrenzten Kurzschlußströmen liefert, was zu einem Verlust der Gesamtleistung der autonomen Vorrichtung führt und somit die technologischen Möglichkeiten derselben einschränkt.

Außerdem muß in der genannten autonomen Vorrichtung zusätzlich eine Akkumulatorbatterie und im Steuerteil eine Schweißstromregeleinheit benutzt werden, was die Bauart der autonomen Vorrichtung wesentlich kompliziert und dadurch deren Selbstkosten erhöht.

### Offenbarung der Erfindung

Der vorliegenden Erfindung ist die Aufgabe zugrundegelegt, eine autonome Lichtbogenschweißvorrichtung zu schaffen, die einen solchen Steuerteil aufweisen würde, der es gestattet, Leistungsverluste in der autonomen Vorrichtung zu vermeiden und deren Bauart zu vereinfachen.

Die gestellte Aufgabe wird dadurch gelöst, daß in der autonomen Lichtbogenschweißvorrichtung, die einen Ladegenerator, mit dessen Eingang ein Motor mechanisch gekoppelt ist, einen mit dem Ladegenerator elektrisch verbundenen Akkumulator, mit dessen Pluspolklemme der Motor in elektrischer Verbindung steht, einen mit dem Ladegenerator und der Pluspolklemme des Akkumulators elektrisch verbundenen Haupt-Spannungsregler, einen mit dem Ladegenerator und der Pluspolklemme des Akkumulators elektrisch verbundenen Steuerteil und ein Lichtbogenschweißmittel mit zwei Elektroden enthält, von denen die eine Elektrode sowie die einen Anschlüsse des Motors, des Ladegenerators und des Haupt-Spannungsreglers und die Minuspolklemme des Akkumulators in einem gemeinsamen Verbindungspunkt miteinander verbunden sind, erfindungsgemäß der Steuerteil mit einer Trenndiode, deren Anode an den Akkumulator und deren Kathode an den Ladegenerator sowie die andere Elektrode des Lichtbogenschweißmittels angeschlossen ist, einem zusätzlichen Spannungsregler, dessen eines Anschlußende mit der Anode der Trenndiode verbunden ist, einem Umschalter, dessen einer Kontakt am Eingang des Ladegenerators liegt und dessen Leiterbrücke an seine zwei anderen Kontakte wechselweise schaltbar ist, die jeweils mit den Anschlußenden des zusätzlichen Spannungsreglers und dem Ausgang des Haupt-Spannungsreglers verbunden sind, und einem Schalter versehen ist, dessen Kontakte an die Anode bzw. die Kathode der Trenndiode angeschlossen sind.

Mit der vorliegenden Erfindung gelingt es, Leistungsverluste in der autonomen Lichtbogenschweißvorrichtung zu vermeiden, wodurch deren technologische Möglichkeiten erweitert werden.

Darüber hinaus bietet die vorliegende Erfindung die Möglichkeit, die Bauart der autonomen Lichtbogenschweißvorrichtung zu vereinfachen, was die Selbstkosten derselben verringert.

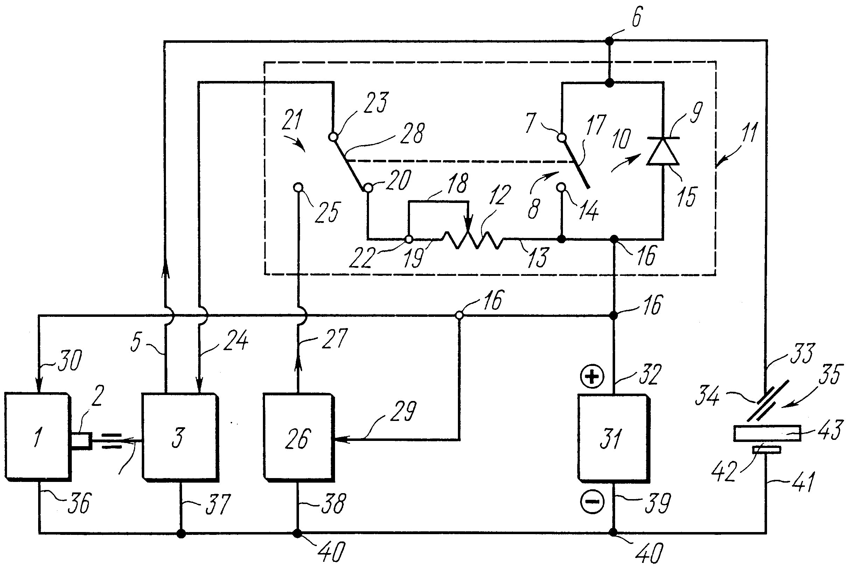

### Kurze Beschreibung der Zeichnung

Nachstehend wird die Erfindung durch Beschreibung einer konkreten Ausführungsform derselben unter Bezugnahme auf eine beigefügte Zeichnung näher erläutert, in der ein Funktionsschaltbild der erfindungsgemäßen autonomen Lichtbogenschweißvorrichtung dargestellt ist.

### Beste Ausführungsform der Erfindung

Zur Durchführung der Lichtbogenschweißung beim Nichtvorhandensein von stationären Energiequellen in der autonomen Lichtbogenschweißvorrichtung kann man ein Fahrzeug, beispielsweise einen Personenkraftwagen, benutzen.

Die autonome Lichtbogenschweißvorrichtung enthält einen Kraftwagenmotor 1, mit dessen Welle 2 ein Ladegenerator 3 über seinen Eingang 4 gekuppelt ist. An den Ausgang 5 des Generators 3 sind ein Kontakt 7 eines Schalters 8 und die mit dem Kontakt 7 im Verbindungspunkt 6 verbundene Kathode 9 der Trenndiode 10 eines Steuerteils 11 angeschlossen. Der Steuerteil 11 enthält einen Spannungsregler 12, dessen eines Anschlußende 13 mit dem anderen Kontakt 14 des Schalters 8 und mit der Anode 15 der Trenndiode 10 in einem Verbindungspunkt 16 verbunden ist. Mit dem Kontakt 7 des Schalters 8 ist dessen Leiterbrücke 17 mechanisch gekoppelt.

Die zwei anderen Anschlußenden 18 und 19 des Reglers 12 sowie der eine Kontakt 20 eines Umschalters 21 sind in einem Verbindungspunkt 22 zusammengeschaltet. Der weitere Kontakt 23 des Umschalters 21 des Steuerteils 11 steht mit dem Regeleingang 24 des Generators 3 in Verbindung. An den letzten Kontakt 25 des Umschalters 21 des Steuerteils 11 ist ein Spannungsregler 26 des Kraftwagens über seinen Ausgang 27 angeschlossen. Mit dem Kontakt 23 des Umschalters 21 ist dessen Leiterbrücke 28 mechanisch gekoppelt. Die Leiterbrücken 17 und 28 des Schalters 8 bzw. des Umschalters 21 sind miteinander starr verbunden (diese Verbindung ist in der Zeichnung gestrichelt angedeutet). An den Punk 16 sind der Eingang 29 des Reglers 26, der Eingang 30 des Motors 1 und die Pluspolklemme 32 des Kraftwagenakkumulators 31 gelegt. Mit dem Punkt 6 ist die Zuleitung 33 der Elektrode 34 eines Lichtbogenschweißmittels 35 zusammengeschaltet. Die weiteren Anschlüsse 36, 37 und 38 des Motors 1, des Generators 3 bzw. des Reglers 26 sowie die Minuspolklemme 39 des Akkumulators 31 sind in einem Verbindungspunkt 40 miteinander zusammengeschaltet. An den Punkt 40 ist die Zuleitung 41 der anderen Elektrode 42 des Lichtbogenschweißmittels 35 angeschlossen. Mit der Elektrode 42 des Mittels 35 steht ein zu schweißendes Werkstück 43 in elektrischer Verbindung.

Die erfindungsgemäße autonome Lichtbogenschweißvorrichtung arbeitet wie folgt.

Im Ladebetrieb sind vor Einschalten des Kraftwagenmotors 1 die Kontakte 7 und 14 des Steuerteils 11 durch dessen Leiterbrücke 17 geschlossen. Gleichzeitig sind die Kontakte 25 und 23 des Umschalters 21 durch dessen Leiterbrücke 28 geschlossen. Von der Pluspolklemme 32 des Kraftwagenakkumulators 31 wird dem Eingang 30 des Motors 1 und dem Eingang 29 des Spannungsreglers 26 des Kraftwagens ein Signal zugeführt, das vom Ausgang 27 des Reglers 26 über die geschlossenen Kontakte 20 und 23 des Umschalters 21 an den Regeleingang 24 des Ladegenerators 3 gelangt. Man schaltet dann den Motor 1 ein, dessen rotierende Welle 2 die mechanische Energie auf den Eingang 4 des Generators 3 überträgt. Der Generator 3 wandelt die mechanische Energie in die elektrische um, so daß eine Spannung von seinem Ausgang 5 über den geschlossenen Schalter 8 an die Klemme 32 des Akkumulators 31 angelegt wird, wodurch dieser wieder aufgeladen wird. Gleichzeitig gelangt diese Spannung auch an die Eingänge 29 und 30 des Reglers 26 bzw. des Motors 1. Und wieder gelangt die so geregelte Spannung vom Ausgang 27 des Reglers 26 an den Eingang 24 des Generators 3.

Zur Durchführung der Lichtbogenschweißung am zu schweißenden Werkstück 43 verschiebt man die Leiterbrücken 17 und 28 des Schalters 8 bzw. des Umschalters 21 des Steuerteils 11, wodurch jeweils die Kontakte 7 und 14 des Schalters 8 geöffnet und die Kontakte 20 und 23 des Umschalters 21 geschlossen werden. Von der Klemme 32 des Akkumulators 31 wird ein Signal dem zusätzlichen Spannungsregler 12 des Steuerteils 11 und von diesem aus dem Eingang 24 des Generators 3 zugeleitet. Zugleich wird vom Ausgang 5 des Generators 3 an die Elektrode 34 des Lichtbogenschweißmittels 35 eine "Leerlaufspannung" angelegt. Der Wert dieser Spannung wird durch den Regler 12 des Steuerteils 11 festgelegt. Dabei übersteigt die Spannung am Ausgang 5 des Generators 3 beträchtlich die Ladespannung des Akkumulators 31, weshalb die Trenndiode 10 des Steuerteils 11 diese höhere Spannung vom Generator 3 zum Akkumulator 31 nicht durchläßt, wodurch dessen Umladung vermieden wird. Mit dem Eintreffen einer Spannung an der Elektrode 34 des Lichtbogenschweißmittels 35 wird zwischen dieser und der anderen Elektrode 42 ein Lichtbogen gezündet. Am zu schweißenden Werkstück 43 geschieht ein sprunghafter Stromanstieg. Entsprechend der "fallenden" Stromspannungskennlinie des Generators 3 mit begrenztem Kurzschlußstrom erfolgt durch Wärmeeinwirkung des Lichtbogens ein Abschmelzen des Metalls der Elektrode 34 mit anschließender Übertragung von sich bildenden Tropfen des Abschmelzmetalls auf das Werkstück 43. Hierbei bilden die Metalltropfen Brücken, die die Lichtbogenstrecke schließen und einen sprunghaften Stromanstieg bewirken. Alsdann wird entsprechend der "fallenden" Stromspannungskennlinie des Generators 3 mit steigendem Strom an dessen Ausgang 5 die Spannung vermindert und, nachdem sie der Spannung des Akkumulators 31 gleich oder geringer als diese geworden ist, wird der Elektrode 34 die Spannung vom Akkumulator 31 über die Diode 10 zugeführt. Der Akkumulator 31 besitzt bekanntlich eine "starre" Stromspannungskennlinie mit hohen Kurzschlußströmen, die den Übergang von Metalltropfen in ein beim Schweißen an der Oberfläche des Werkstücks 43 entstehendes Schweißbad beschleunigen. Nach erfolgtem Übergang eines Metalltropfens ins Schweißbad findet ein Abreißen des Lichtbogens und ein sprunghafter Stromabfall statt. Dabei wird die Spannung am Ausgang 5 des Generators 3 auf dessen "Leerlaufspannung" vergrößert, was für das Neuzünden des Lichtbogens ausreicht.

Die vorliegende Erfindung ermöglicht unter Einsatz eines weit bekannten Drahtvorschubgeräts die Anwendung von dünnem Draht als Elektrode und die Durchführung der Schweißung von Feinblechen oder verschiedenen Konstruktionen aus denselben.

Außerdem ermöglicht es die Erfindung, mit steigender Leistung des Kraftwagens Werkstücke größerer Dicke zu schweißen, wobei als Elektrode ein dicker Draht benutzt wird.

Hinzu kommt, daß die Erfindung die Möglichkeit bietet, ein beliebiges Fahrzeug mit der erfindungsgemäßen autonomen Lichtbogenschweißvorrichtung ohne Änderung seiner Bauart auszustatten.

### Industrielle Anwendbarkeit

Die Erfindung kann in solchen Zweigen wie Bauwesen, Maschinenbau, erdöl-und erdgasfördernde Industrie verwendet werden.

Außerdem läßt sich diese Erfindung mit besonderem Erfolg bei Reparatur, Montagearbeiten anwenden, wenn keine stationären Energiequellen zur Verfügung stehen.

## Patentansprüche

1. Autonome Lichtbogenschweißvorrichtung, die einen Ladegenerator (3), mit dessen Eingang (4) ein Motor (1) mechanisch gekoppelt ist, einen mit dem Ladegenerator (3) elektrisch verbundenen Akkumulator (31), mit dessen Pluspolklemme (32) der Motor (1) in elektrischer Verbindung steht, einen mit dem Ladegenerator (3) und der Pluspolklemme (32) des Akkumulators (31) elektrisch verbundenen Haupt-Spannungsregler (26), einen mit dem Ladegenerator (3) und der Pluspolklemme (32) des Akkumulators (31) elektrisch verbundenen Steuerteil (11) und ein Lichtbogenschweißmittel (35) mit zwei Elektroden (34, 42) enthält, von denen die eine Elektrode (42) sowie die einen Anschlüsse (36, 37, 38) des Motors (1), des Ladegenerators (3) bzw. des Haupt-Spannungsreglers (26) und die Minuspolklemme (39) des Akkumulators (31) in einem Verbindungspunkt (40) miteinander verbunden sind, dadurch **gekennzeichnet,** daß der Steuerteil (11) mit einer Trenndiode (10), deren Anode (15) an den Akkumulator (31) und deren Kathode an den Ladegenerator (3) sowie die andere Elektrode (34) des Lichtbogenschweißmittels (35) angeschlossen ist, einem zusätzlichen Spannungsregler (12), dessen eines Anschlußende (13) mit der Anode (15) der Trenndiode (10) verbunden ist, einem Umschalter (21), dessen einer Kontakt (23) am Eingang (24) des Ladegenerators (3) liegt und dessen Leiterbrücke (28) an seine zwei anderen Kontakte (20, 25) wechselweise schaltbar ist, die jeweils mit den Anschlußenden (18, 19) des zusätzlichen Spannungsreglers (12) und dem Ausgang (27) des Haupt-Spannungsreglers (26) verbunden sind, und einem Schalter (8) versehen ist, bei dem die Kontakte (14, 7) an die Anode (15) bzw. die Kathode (9) der Trenndiode (10) angeschlossen sind.
